# EUROPÄISCHE PATENTSCHRIFT

(11) **EP 3 561 262 B1**
(45) Veröffentlichungstag und Bekanntmachung des Hinweises auf die Patenterteilung: **31.03.2021**
(21) Anmeldenummer: 19167251.8
(22) Anmeldetag: 04.04.2019
(51) Int. Cl.: F02B 39/10, F02B 37/04, F02B 37/16, F01N 13/00, F01N 3/20

(54) **BRENNKRAFTMASCHINE UND VERFAHREN ZUM BETREIBEN EINER BRENNKRAFTMASCHINE**
COMBUSTION ENGINE AND METHOD FOR OPERATING A COMBUSTION ENGINE
MOTEUR À COMBUSTION ET PROCÉDÉ POUR FAIRE FONCTIONNER UN MOTEUR À COMBUSTION

(30) Priorität: 24.04.2018 DE 102018206245; 18.03.2019 DE 102019106773
(43) Veröffentlichungstag der Anmeldung: 30.10.2019
(73) Patentinhaber: VOLKSWAGEN AKTIENGESELLSCHAFT, 38440 Wolfsburg (DE)
(72) Erfinder: Pott, Ekkehard, 38518 Gifhorn (DE); Blei, Ingo, 38110 Braunschweig (DE); Bunkus, Johannes, 38442 Wolfsburg (DE); Kellner, Stephan, 38440 Wolfsburg (DE); Westendorf, Johannes, 38104 Braunschweig (DE)
(74) Vertreter: Gulde & Partner

(56) Entgegenhaltungen:
- EP-A1- 3 406 878
- WO-A1-2017/063832
- WO-A1-2017/100097
- DE-A1-102014 223 491

## Beschreibung

Die Erfindung betrifft eine Brennkraftmaschine mit einem Abgasnachbehandlungssystem und einem elektrisch antreibbaren Verdichter sowie ein Verfahren zum Betreiben einer solchen Brennkraftmaschine gemäß den Oberbegriffen der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen StickoxidEmissionen und Rußpartikel eine Herausforderung für die Motorenentwickler dar. Der Ausstoß von Stickoxiden und Rußpartikeln ist gesetzlich begrenzt. In Zukunft sind weitere Verschärfungen der gesetzlichen Grenzwerte bezüglich dieser beiden Schadstoffe zu erwarten. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren sowie einem Ottopartikelfilter. Bei Dieselmotoren finden aktuell Abgasnachbehandlungssysteme Verwendung, welche einen Oxidationskatalysator oder einen NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Durch die zunehmenden Anforderungen an die Abgasreinigung steigt die Anzahl der Abgasnachbehandlungskomponenten sowie deren Bauraumbedarf. Diese verursacht Package-, Gewichts- und Kostenprobleme. Zudem wird die Aktivierung der Abgasnachbehandlungskomponenten immer herausfordernder, wobei zum Aufheizen der Abgasnachbehandlungskomponenten zusätzliche Energie benötigt wird, welche die Kraftstoffeffizienz des Verbrennungsmotors reduziert und zu einem Mehrverbrauch führt. Es ist bekannt, dass durch ein Anheben der Abgasrückführungsrate die Stickoxid-Rohemissionen (NOx-Rohemissionen) gemindert werden können, jedoch gleichzeitig die Partikelemissionen ansteigen. Dieser Effekt, welcher auch als "Partikel-NOx-Tradeoff" bezeichnet wird, nimmt bei positiven Lastsprüngen mit der Dynamik der Laständerung noch zu, das heißt, die Partikelemissionen steigen zur Sicherstellung von niedrigen Stickoxidemissionen überproportional an.

Brennkraftmaschinen werden mit Verdichtern betrieben, um die Leistung zu steigern und/oder den Wirkungsgrad der Brennkraftmaschine zu erhöhen. Insbesondere wahlweise antreibbare Verdichter werden genutzt, um die Betriebskennfelder von Brennkraftmaschinen zu optimieren. Dabei sind Abgasturbolader bekannt, bei denen der Verdichter wahlweise durch eine im Abgaskanal angeordnete Turbine und/oder durch einen elektrischen Zusatzantrieb angetrieben werden kann. Durch einen elektrisch antreibbaren Verdichter wird durch das veränderte Druckgefälle die Abgasrückführrate beeinflusst oder sogar komplett eingestellt, insbesondere wenn die Verdichter nicht mit einer Turbine im Abgasstrang gekoppelt sind.

Die Beeinflussung einer Abgasrückführrate und die veränderte Durchflussmasse verursacht vom Verdichter haben einen negativen Effekt auf die Emissionen der Brennkraftmaschine. Insbesondere die Emissionen von Stickoxiden werden durch die eingeschränkten Abgasemissionen erhöht. Der erhöhte Massendurchfluss verursacht durch den Verdichter benötigt ein früheres Erreichen der Betriebstemperatur der Katalysatoren zur Abgasbehandlung, da sonst in Relation zu einem Betrieb ohne den wahlweise betriebenen Verdichter die Schademissionen des Abgases stark erhöht sind.

Aus der DE 10 2014 223 491 A1 ist ein Verbrennungsmotor mit einem Ansaugtrakt und einer Abgasanlage bekannt, welcher mittels eines Abgasturboladers und eines elektrischen Verdichters aufgeladen ist. In der Abgasanlage ist ein elektrisch beheizbarer NOx-Speicherkatalysator vorgesehen, welchem ein SCR-Katalysator nachgeschaltet ist.

Der Verbrennungsmotor weist ferner eine Gaszufuhreinrichtung auf, mit welcher eine von dem Verbrennungsmotor unabhängige Gasströmung durch die Abgasanlage erzeugt werden kann. Dabei wird der passive NOx-Speicherkatalysator auf eine Temperatur oberhalb dessen Desorptionstemperatur erhitzt und der SCR-Katalysator auf dessen Betriebstemperatur gehalten, wobei der passive NOx-Speicherkatalysator entladen wird.

Die WO 2017 / 063 832 A1 offenbart ein Kraftfahrzeug, insbesondere ein Hybridfahrzeug, mit einem elektrischen 48-Volt-Bordnetz, wobei ein elektrisches Heizelement eines Katalysators und ein elektrischer Zusatzverdichter durch das 48-Volt-Bordnetz betrieben werden.

Die EP 3 406 878 A1 offenbart einen Verbrennungsmotor mit einem Abgasturbolader und einem elektrisch angetriebenen Verdichter. Dabei weist der elektrisch angetriebene Verdichter einen Bypass auf, in dem ein Bypassventil angeordnet ist, wobei das Bypassventil bei einer Aktivierung des elektrisch angetriebenen Verdichters geschlossen wird.

Aus der WO 2017 / 100 097 A1 ist ein mehrstufig aufgeladener Zweitaktmotor für eine Schwerlastanwendung bekannt. Dabei ist der Zweitaktmotor als Gegenkolbenmotor mit zwei Kolben ausgeführt, die sich in einer gemeinsamen Bohrung in unterschiedliche Richtungen bewegen. Der Zweitaktmotor verfügt über ein Luftversorgungssystem mit einer Abgasrückführung.

Der Erfindung liegt nun die Aufgabe zugrunde, die Abgasemissionen eines Verbrennungsmotors mit einem elektrisch antreibbaren Verdichter zu reduzieren und die Leistung des Verbrennungsmotors zu optimieren.

Die Aufgabe wird durch eine Brennkraftmaschine mit einem wahlweise antreibbaren Verdichter auf einer Frischluftseite der Brennkraftmaschine und einem beheizbaren Katalysator auf einer Abgasseite der Brennkraftmaschine gelöst. Dabei sind die Brennkraftmaschine und der wahlweise antreibbare Verdichter mit einem Bordnetz eines Kraftfahrzeuges verbunden. Es ist vorgesehen, dass der Katalysator ein mit dem Bordnetz verbundenes elektrisches Heizelement umfasst und mit dem Heizelement das Substrat des Katalysators und/oder die Abgasseite stromaufwärts des Substrates des Katalysators beheizbar ist. So kann auf vorteilhafte Weise das Betriebskennfeld der Brennkraftmaschine mit dem Verdichter optimiert werden und mit dem Heizelement die Emission beim Betrieb des Verdichters optimiert werden. Dadurch können die Partikelrohemissionen gesenkt und gleichzeitig ein Anstieg der Stickoxidemissionen minimiert werden.

Durch die in den abhängigen Ansprüchen genannten Merkmale sind vorteilhafte Weiterentwicklungen und nicht triviale Verbesserungen der im unabhängigen Anspruch 1 angegebenen Brennkraftmaschine möglich.

In bevorzugter Ausgestaltung der Erfindung ist vorgesehen, dass die Brennkraftmaschine mindestens eine Brennkammer umfasst, wobei die Brennkammer einlassseitig mit einem Luftversorgungssystem und auslassseitig mit einer Abgasanlage verbunden ist. Dabei ist die Brennkraftmaschine vorzugsweise als Hubkolbenmotor ausgeführt, in dessen Brennkammern ein Kraftstoff-Luft-Gemisch verbrannt wird.

In einer vorteilhaften Weiterentwicklung der Brennkraftmaschine ist vorgesehen, dass in der Abgasanlage eine Turbine eines Abgasturboladers angeordnet ist, wobei die Turbine einen Verdichter in dem Luftversorgungssystem antreibt, wobei der wahlweise antreibbare Verdichter stromabwärts des Verdichters des Abgasturboladers angeordnet ist. Dadurch lässt sich neben den positiven Effekten des Abgasturboladers bezüglich einer Erhöhung der spezifischen Leistung der Brennkraftmaschine und des Gesamtwirkungsgrads ein zusätzlicher Verdichter zuschalten, welcher schneller als der Verdichter des Abgasturboladers auf einen dynamischen Lastsprung der Brennkraftmaschine reagiert und somit zu einer besseren Füllung der Brennkammern beiträgt.

Besonders bevorzugt ist dabei, wenn der wahlweise antreibbare Verdichter in einem Bypass zum Ansaugkanal des Luftversorgungssystems angeordnet ist. Durch eine Anordnung des wahlweise antreibbaren Verdichters in einem Bypass kann dieser besonders einfach bedarfsgerecht zu- und abgeschaltet werden. Dabei liegt der wahlweise antreibbare Verdichter im abgeschalteten Betriebszustand nicht im Ansaugkanal, wodurch der Strömungswiderstand nicht ansteigt.

In einer weiteren Verbesserung der Erfindung ist vorgesehen, dass an einer Verzweigung und/oder an einer Einmündung des Bypasses in den Ansaugkanal eine Steuerklappe angeordnet ist, mit welcher ein Luftstrom wahlweise durch den Ansaugkanal, durch den Bypass oder durch den Ansaugkanal und den Bypass geleitet werden kann. Durch eine solche Steuerklappe kann auf einfache Art und Weise die Frischluftversorgung über den Bypass und/oder den Ansaugkanal erfolgen, wodurch ein bedarfsgerechtes Zuschalten des wahlweise antreibbaren Verdichters erleichtert wird.

In einer alternativen Ausführungsform der Erfindung ist vorgesehen, dass der wahlweise antreibbare Verdichter der Verdichter des Abgasturboladers ist, wobei der Verdichter zusätzlich oder alternativ zum Antrieb durch die Turbine des Abgasturboladers durch einen elektrischen Antriebsmotor antreibbar ist. Alternativ zu einem zusätzlichen Verdichter kann auch durch ein wahlweises Zuschalten eines elektrischen Antriebsmotors am Verdichter des Abgasturboladers das Ansprechverhalten in dynamischen Betriebszuständen der Brennkraftmaschine verbessert werden. Dabei kann der elektrische Antriebsmotor den Verdichter schneller aktivieren als die Turbine des Abgasturboladers, wodurch das Ansprechverhalten verbessert und das sogenannte "Turboloch" verkleinert wird. Dies führt nicht nur zu einer verbesserten Leistungscharakteristik der Brennkraftmaschine, sondern auch zu geringeren Partikelrohemissionen, da die Füllung verbessert wird und dem Kraftstoff in den Brennkammern mehr Sauerstoff für die Verbrennung zur Verfügung steht.

Erfindungsgemäß ist dabei vorgesehen, dass der wahlweise antreibbare Verdichter eine Peakleistung von 2,5 KW - 6 KW aufweist. Durch eine solche Peakleistung kann sichergestellt werden, dass eine hinreichende Frischluftmenge durch den wahlweise antreibbaren Verdichter den Brennkammern des Verbrennungsmotors zugeführt wird, um effizient die Partikelrohemissionen zu minimieren.

In einer bevorzugten Ausführungsform der Brennkraftmaschine ist vorgesehen, dass die Spannung des Bordnetzes 40 Volt - 56 Volt, insbesondere 48 Volt beträgt. Durch ein 48-Volt-Bordnetz kann auf vergleichsweise einfache Art und Weise hinreichend viel elektrische Leistung bereitgestellt werden, um sowohl das elektrische Heizelement in der Abgasanlage als auch gleichzeitig den elektrischen Antriebsmotor des wahlweise antreibbaren Verdichters mit Strom zu versorgen und die geforderten Leistungen darzustellen.

So kann auf vorteilhafte Weise die Leistung des Heizelements des Katalysators und/oder der wahlweise angetriebene Verdichter für Brennkraftmaschinen in einer optimierten Größe gewählt werden, damit der Effekt dieser wesentlich für den Betrieb der Brennkraftmaschine ist.

Erfindungsgemäß ist vorgesehen, dass das Heizelement eine Heizleistung aufweist, welche zwischen 50 % und 100 % der Peakleistung des wahlweise antreibbaren Verdichters liegt.

Bevorzugt ist dabei, dass der wahlweise antreibbare Verdichter so ausgelegt ist, damit diese Peakleistung für bis zu 100 ms oder 100 ms - 500 ms, insbesondere 100 ms - 400 ms, bevorzugt 100 ms - 300 ms, besonders bevorzugt 100 ms - 200 ms anforderbar ist.

Durch die eingestellte Dauer der Peakleistung ist auf vorteilhafte Weise ein schneller Anlauf des wahlweise betreibbaren Verdichters gewährleistet, bis dieser auf eine gewünschte Betriebsleistung eingestellt werden kann. Somit kann ein Anstieg der Partikelemissionen durch eine mangelnde Frischluftzufuhr und eine unzureichende Umsetzung des in die Brennkammern eingespritzten Kraftstoffs verhindert werden.

Besonders bevorzugt ist es, dass der wahlweise antreibbare Verdichter eine Leistungsdauer der Peakleistung von 200 ms - 500 ms aufweist.

Erfindungsgemäß kann diese Betriebsleistung des Verdichters für bis zu 10 s abgerufen werden. Bevorzugt zwischen 1 und 3 s und noch bevorzugter 2 bis 3 s.

Durch diese Betriebsleistung und/oder die Betriebsdauer kann vorteilhaft eine Leistungsoptimierung der Brennkraftmaschine erfolgen. Somit können sowohl die Rohemissionen als auch die Leistungscharakteristik der Brennkraftmaschine verbessert werden. Dies ist für den Fahrer insbesondere beim Beschleunigen aus niedrigen Drehzahlen zu spüren, wenn der Verdichter des Abgasturboladers durch geringe Drehzahlen der Turbine nur verzögert mit einem der Leistungsanforderung entsprechenden Leistungsaufbau beginnt.

Die erfindungsgemäße Brennkraftmaschine kann einen Generator umfassen. Dieser Generator kann mit der Brennkraftmaschine wahlweise koppelbar sein. Darüber hinaus kann dieser Generator mit oder ohne eine Batterie als Stromquelle für den wahlweise antreibbaren Verdichter und/oder das Heizelement des Katalysators dienen. Darüber hinaus kann bei einer Nutzung des Generators eine Lastanhebung der Brennkraftmaschine erfolgen und die zusätzliche Arbeit der Brennkraftmaschine für den Generator genutzt werden. Bei dem Generator kann es sich bevorzugt um die Lichtmaschine der Brennkraftmaschine eines Fahrzeugs handeln. Das Fahrzeug kann bevorzugt ein Kraftfahrzeug für den Straßenverkehr sein.

So kann auf vorteilhafte Weise der wahlweise antreibbare Verdichter und/oder das Heizelement des Katalysators mit Energie versorgt werden. Darüber hinaus kann so vorteilhaft durch die Lastanhebung der Brennkraftmaschine die Abgastemperatur weiter angehoben werden. Diese Bauteile und der erhöhte Energieeintrag in die Abgasanlage sorgen jeder für sich für einen verbesserten Betrieb der Abgasanlage und der Brennkraftmaschine und stehen hier aber in einer Synergie zueinander.

In einer bevorzugten Ausführungsform ist die Brennkraftmaschine als selbstzündender Verbrennungsmotor nach dem Dieselprinzip, insbesondere als direkteinspritzender Dieselmotor, ausgeführt. Gerade Dieselmotoren sind aufgrund ihres im Vergleich zu Ottomotoren höheren thermischen Wirkungsgrad davon betroffen, dass ein Aufheizen der Katalysatoren durch den Abgasstrom vergleichsweise lange dauert, da das Abgas des Dieselmotors im Vergleich zu einem Ottomotor bei gleicher Leistungsanforderung kälter ist. Zudem wird der Dieselmotor betriebsbedingt mit einem Luftüberschuss betrieben, was die Abgasreinigung von Stickoxidemissionen erschwert. Um eine hocheffiziente Reduzierung dieser Stickoxidemissionen zu ermöglichen, ist eine Kombination aus einem NOx-Speicherkatalysator und einem nachgeschalteten SCR-Katalysator bekannt. Diese Katalysatoren benötigen jedoch eine Betriebstemperatur von mindestens 150°C (im Fall des NOx-Speicherkatalysators) beziehungsweise mindestens 200°C (im Falle des SCR-Katalysators), um eine effiziente Konvertierung von Stickoxiden zu ermöglichen. Dies wird durch das elektrische Heizelement in dem Substrat des Katalysators oder durch ein dem Substrat vorgeschaltetes elektrisches Heizelement erreicht.

In einer bevorzugten Ausführungsform weist der Dieselmotor einen Hubraum von 0,35 dm³ bis 0,6 dm³ pro Brennraum auf. Dies entspricht bei einem Vierzylindermotor einem Hubraum von 1,4 dm³ bis 2,4 dm³ beziehungsweise bei einem Sechszylindermotor einem Hubraum von 2,1 dm³ bis 3,6 dm³. Brennräume mit dieser Größe haben sich bei Personenkraftwagen als besonders vorteilhaft bezüglich der zu erzielenden Leistung, dem Drehmoment und dem Verbrauch herausgestellt.

In einer bevorzugten Ausführungsform weist der Dieselmotor drei bis acht Brennräume, bevorzugt vier bis sechs Brennräume auf. Um die Leistungsanforderung von Personenkraftfahrzeugen im Bereich von etwa 75 KW - 180 KW abzudecken, sind Vierzylindermotoren, mit einfacher oder mehrfacher Aufladung bevorzugt. Für Leistungen oberhalb von 150 KW kann die Verwendung eines Sechszylindermotors vorteilhaft sein, um die höhere Leistung und/oder eine höhere Anforderung an die Laufruhe der Brennkraftmaschine zu erfüllen.

Die Brennkraftmaschine kann bevorzugt 40 kW pro Liter Hubraum bis 90 kW pro Liter Hubraum an Leistung liefern, wenn diese einen Turbolader umfasst, idealer Weise können 55 kW pro Liter Hubraum bis 80 kW pro Liter Hubraum vorgesehen sein. Die Brennkraftmaschine kann auch zwei Turbolader umfassen und dann eine Leistung von 75 kW pro Liter Hubraum bis 90 kW pro Liter Hubraum aufweisen.

In einer vorteilhaften Ausführungsform der Brennkraftmaschine ist vorgesehen, dass in einer Abgasanlage der Brennkraftmaschine stromabwärts einer Turbine eines Abgasturboladers ein Oxidationskatalysator oder ein NOx-Speicherkatalysator, stromabwärts des Oxidationskatalysators oder des NOx-Speicherkatalysators ein Partikelfilter mit einer Beschichtung zur selektiven, katalytischen Reduktion von Stickoxiden (SCR-Beschichtung) und stromabwärts des Partikelfilters ein weiterer SCR-Katalysator angeordnet sind. Dadurch ist eine besonders effiziente Abgasnachbehandlung in Bezug auf Stickoxidemissionen und Rußpartikel möglich.

Bevorzugt ist dabei eine Ausführungsform, bei der das elektrische Heizelement in den Oxidationskatalysator oder den NOx-Speicherkatalysator integriert ist oder einem dieser Katalysatoren unmittelbar vorgeschaltet ist. Um unmittelbar nach einem Kaltstart die Stickoxidemissionen zu senken, ist eine Zwischenspeicherung der Stickoxidemissionen in einem NOx-Speicherkatalysator sinnvoll, zumindest bis einer der SCR-Katalysatoren seine Betriebstemperatur erreicht hat. Durch ein zusätzliches elektrisches Beheizen des NOx-Speicherkatalysators wird dessen Betriebstemperatur von mehr als 150°C zeitnah nach einem Kaltstart der Brennkraftmaschine erreicht. Zudem kann das elektrische Heizelement genutzt werden, um den Abgasstrom der Brennkraftmaschine zu erwärmen, wodurch auch der Partikelfilter mit der SCR-Beschichtung zeitnah nach einem Kaltstart der Brennkraftmaschine seine Light-Off-Temperatur erreicht.

Alternativ ist mit Vorteil vorgesehen, dass das elektrische Heizelement stromabwärts des Oxidationskatalysators oder des NOx-Speicherkatalysators und stromaufwärts des Partikelfilters angeordnet ist oder in den Partikelfilter integriert ist. Durch ein elektrisches Heizelement, welches dem Partikelfilter mit der SCR-Beschichtung zugeordnet ist, können Abwärmeverluste durch die Wand des Abgaskanals sowie eine zeitliche Verzögerung durch das Durchwärmen des Oxidationskatalysators oder des NOx-Speicherkatalysators vermieden werden. Dadurch erreicht die SCR-Beschichtung des Partikelfilters schneller ihre Light-Off-Temperatur.

In einer bevorzugten Ausführungsform der Erfindung ist vorgesehen, dass die Brennkraftmaschine eine Hochdruck-Abgasrückführung aufweist, welche eine Auslassseite der Brennkammern mit einer Einlassseite der Brennkammern verbindet. Um auch bei niedrigen Abgastemperaturen und zeitnah nach einem Kaltstart der Brennkraftmaschine die Stickoxidemissionen zu minimieren, ist es sinnvoll, einen Teil des Abgasstroms über die Hochdruck-Abgasrückführung der Einlassseite der Brennkraftmaschine zuzuführen. Dadurch können die Stickoxidemissionen signifikant verringert werden.

Besonders bevorzugt ist dabei, wenn in der Hochdruck-Abgasrückführung ein Abgasrückführungsventil und/oder ein Abgasrückführungskühler angeordnet sind. Durch einen Abgasrückführungskühler kann der positive Effekt der Abgasrückführung in Bezug auf die Stickoxidemissionen verstärkt werden. Dabei kann durch das Abgasrückführungsventil die Menge des zurückgeführten Abgases gesteuert werden, um eine emissionsoptimale Verbrennung in der Brennkammer der Brennkraftmaschine zu realisieren.

In einer weiteren bevorzugten Ausgestaltung der Erfindung ist vorgesehen, dass stromabwärts des Partikelfilters eine Niederdruck-Abgasrückführung aus einem Abgaskanal der Abgasanlage abzweigt, welche stromaufwärts des Verdichters des Abgasturboladers in einen Ansaugkanal des Luftversorgungssystems einmündet. Durch eine Niederdruck-Abgasrückführung kann im Vergleich zu dem über die Hochdruck-Abgasrückführung zurückgeführten Abgas kälteres Abgas von der Abgasseite auf die Frischluftseite zurückgeführt werden, wodurch die Emissionen in einem Normalbetrieb der Brennkraftmaschine reduziert werden können.

Erfindungsgemäß wird ein Verfahren zum Betreiben einer Brennkraftmaschine mit einem wahlweise angetriebenen Verdichter auf der Frischluftseite der Brennkraftmaschine und einem Katalysator auf einer Abgasseite der Brennkraftmaschine vorgeschlagen, wobei der wahlweise angetriebene Verdichter angetrieben wird und wobei der Katalysator ein elektrisches Heizelement umfasst, mit dem das Substrat des Katalysators und/oder die Abgasseite, insbesondere der Abgaskanal stromaufwärts des Substrates beheizt wird. Durch das gleichzeitige Beheizen des elektrischen Heizelements in der Abgasanlage und das Zuschalten des wahlweise angetriebenen Verdichters werden die Emissionen der Brennkraftmaschine reduziert.

In einer Verbesserung des Verfahrens ist vorgesehen, das der wahlweise angetriebene Verdichter in einem dynamischen Betrieb der Brennkraftmaschine zugeschaltet wird, um die Partikelrohemissionen in der mindestens einen Brennkammer der Brennkraftmaschine zu senken. Durch das Zuschalten des wahlweise antreibbaren Verdichters wird die Füllung der Brennkammern in einem dynamischen Betrieb der Brennkraftmaschine, insbesondere bei positiven Lastsprüngen verbessert, wodurch der größeren Menge an eingespritztem Kraftstoff mehr Frischluft zur Umsetzung zur Verfügung steht. Dies reduziert die Partikelemissionen bei der Verbrennung, wodurch weniger Rußpartikel durch den Partikelfilter aus dem Abgasstrom der Brennkraftmaschine entfernt werden müssen. Dies verlängert die Regenerationsintervalle des Partikelfilters, wodurch der Kraftstoffverbrauch und die damit verbundenen Kohlenstoffdioxidemissionen verringert werden können.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein erstes Ausführungsbeispiel für eine erfindungsgemäße Brennkraftmaschine mit einem elektrisch antreibbaren Verdichter;
- Figur 2: ein weiteres Ausführungsbeispiel für eine erfindungsgemäße Brennkraftmaschine mit einem elektrisch antreibbaren Verdichter und einem Abgasnachbehandlungssystem;
- Figur 3: ein Ablaufdiagramm zur Durchführung eines erfindungsgemäßen Verfahrens zum Betreiben einer Brennkraftmaschine; und
- Figur 4: ein Temperaturverlauf beim Aufheizen eines Partikelfilters mit einer SCR-Beschichtung beim Betrieb einer erfindungsgemäßen Brennkraftmaschine.

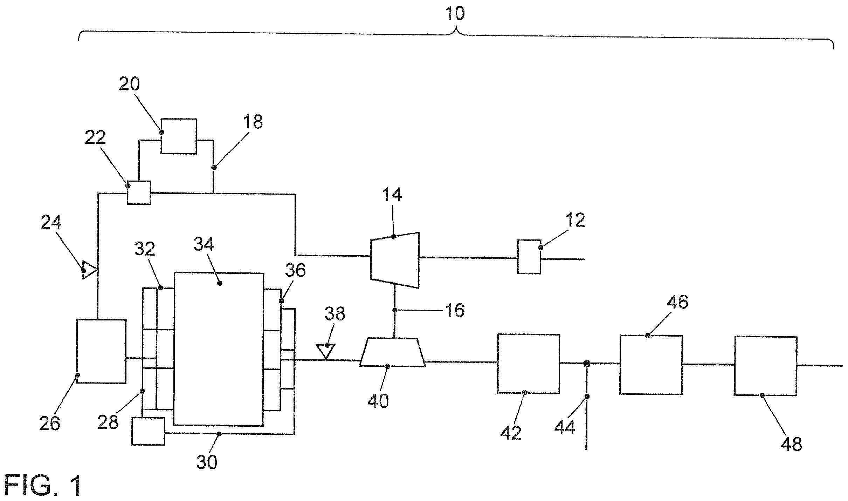

Figur 1 zeigt ein erstes Ausführungsbeispiel einer erfindungsgemäßen Brennkraftmaschine 10. Die Brennkraftmaschine 10 umfasst auf der Frischgasseite an erster Stelle einen Luftfilter 12, einen Verdichter 14 eines Turboladers 16, darauf folgt ein Bypass 18, auf dem ein elektrisch angetriebener Verdichter 20 angeordnet ist. An einer Ausgangsseite des Bypasses 18 ist eine Klappe 22 angeordnet, diese Klappe 22 kann insbesondere eine Drei-Wege-Regelklappe sein. Nach dem Bypass 18 ist ein erster Drucksensor 24 angeordnet, dieser kann zur Regelung und/oder Messung der Frischluftmasse genutzt werden. Stromab des ersten Drucksensors 24 ist ein Ladeluftkühler 26 angeordnet. Stromab des Ladeluftkühlers 26 ist eine Einlassstelle 28 einer Abgasrückführung 30 angeordnet. Diese kann an einer zentralen Stelle stromauf eines Einlasskrümmers 32 in die Frischgasseite der Brennkraftmaschine 10 münden und/oder in mindestens einen spezifischen Einlasskanal des Einlasskrümmers 32 münden. Stromab des Einlasskrümmers 32 sind die Brennkammern 34 der Brennkraftmaschine 10 angeordnet. Diese münden in die Abgasseite der Brennkraftmaschine 10 und zwar aus jeder Brennkammer in den Abgaskrümmer 36 der Brennkraftmaschine 10. Stromab des Abgaskrümmers 36 ist auf der Abgasseite ein zweiter Drucksensor 38 angeordnet, dieser kann zur Bestimmung des Abgasgegendrucks genutzt werden und/oder zur Bemessung/Errechnung der Abgasrückführrate. Stromab des zweiten Drucksensors 38 ist die Turbine 40 eines Turboladers 16 angeordnet. Der Turbolader 16 kann insbesondere über eine variable Geometrie verfügen. Generell können die Turbolader 16 einer erfindungsgemäßen Brennkraftmaschine 10 über eine variable Geometrie verfügen. Stromab des Turboladers 16 sind in diesem Ausführungsbeispiel ein Dieseloxidationkatalysator 42 mit einem elektrischen Heizelement angeordnet, stromab dessen sich eine Dosiereinheit 44 für ein Reduktionsmittel (insbesondere wässrige Harnstofflösung) befindet. Stromab dessen folgt ein Partikelfilter 46 mit einer katalytischen Beschichtung zur Reduktion von Stickoxiden. Zwischen der Dosiereinheit 44 und einem Träger mit einer katalytischen Beschichtung zur Reduktion von Stickoxiden kann generell ein Mischer angeordnet sein, dieser ist hier in der Zeichnung allerdings nicht dargestellt. Stromab des Partikelfilters 46 mit einer katalytischen Beschichtung zur Reduktion von Stickoxiden ist hier ein weiterer Katalysator 48 angeordnet. Dieser kann ein Stickoxidspeicherkatalysator oder ein Katalysator zur selektiven Reduktion von Stickoxiden sein, es können aber auch beide Katalysatoren in einem Canning sein.

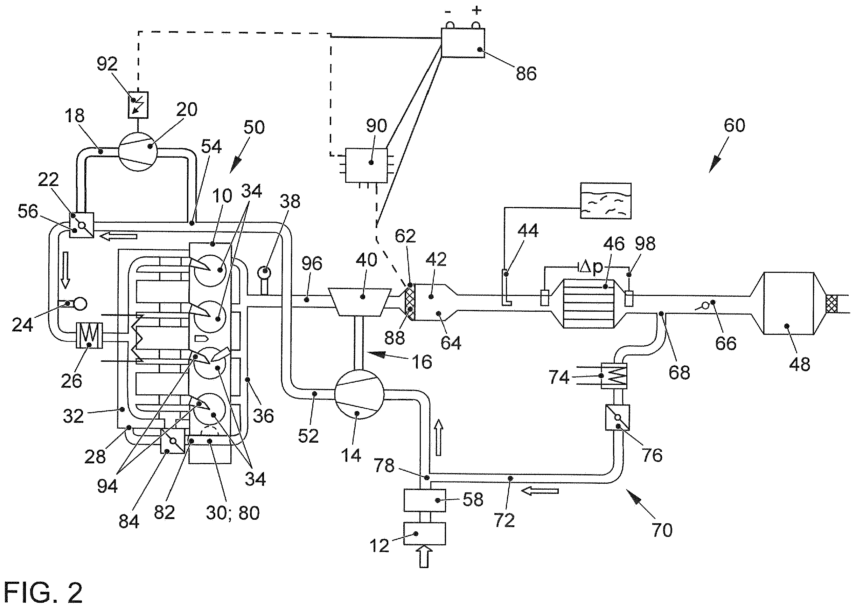

In Figur 2 ist ein weiteres Ausführungsbeispiel einer erfindungsgemäßen Brennkraftmaschine 10 mit einem Luftversorgungssystem 50 und einer Abgasanlage 60 dargestellt. Die Brennkraftmaschine 10 ist als ein direkteinspritzender Dieselmotor ausgeführt und weist mehrere Brennkammern 34 auf. An den Brennkammern 34 ist jeweils ein Kraftstoffinjektor 94 zur Einspritzung eines Kraftstoffes in die jeweilige Brennkammer 34 angeordnet. Die Brennkraftmaschine ist einlassseitig mit einem Luftversorgungssystem 50 und auslassseitig mit einer Abgasanlage 60 verbunden. Die Brennkraftmaschine 10 umfasst ferner eine Hochdruck-Abgasrückführung 30, 80 mit einer Abgasrückführungsleitung 82 und einem Hochdruck-Abgasrückführungsventil 84, über welches ein Abgas der Brennkraftmaschine 10 von einem Abgaskrümmer 36 auf der Abgasseite zu einem Einlasskrümmer 32 auf der Frischluftseite zurückgeführt werden kann. An den Brennkammern 34 sind Einlassventile und Auslassventile angeordnet, mit welchen eine gasführende Verbindung von dem Luftversorgungssystem 50 zu den Brennkammern 34 oder von den Brennkammern 34 zur Abgasanlage 60 geöffnet oder verschlossen werden kann.

Das Luftversorgungssystem 50 umfasst einen Ansaugkanal 52, in welchem in Strömungsrichtung von Frischluft durch den Ansaugkanal 52 ein Luftfilter 12, stromabwärts des Luftfilters 12 ein Luftmassenmesser 58, insbesondere ein Heißfilmluftmassenmesser und stromabwärts des Luftmassenmessers 58 ein Verdichter 14 eines Abgasturboladers 16 angeordnet sind. Stromabwärts des Verdichters 14 zweigt an einer Verzweigung 54 ein Bypass 18 aus dem Ansaugkanal 52 ab, wobei in dem Bypass 18 ein elektrisch antreibbarer Verdichter 20 angeordnet ist.

Der elektrisch antreibbare Verdichter 20 kann durch einen elektrischen Antriebsmotor 92 angetrieben werden, welcher aus einem Bordnetz 86 eines Kraftfahrzeuges, insbesondere einem 48-Volt-Bordnetz, mit Strom versorgt wird. Stromabwärts des elektrisch antreibbaren Verdichters 20 mündet der Bypass 18 wieder in den Ansaugkanal 52, wobei an einer Einmündung 56 des Bypasses 18 in den Ansaugkanal 52 eine Klappe 22, insbesondere eine Drei-Wege-Regelklappe, angeordnet ist, mit welcher ein Frischluftstrom wahlweise durch den Ansaugkanal 52, durch den Bypass 18 oder anteilig durch beide Kanäle 18, 52 geleitet werden kann.

Stromabwärts der Einmündung 56 und stromaufwärts eines Einlasskrümmers 32 der Brennkraftmaschine 10 ist ein Ladeluftkühler 26 angeordnet, mit welchem die Frischluft vor Eintritt in die Brennkammern 34 abgekühlt wird, um die Füllung der Brennkammern 34 zu verbessern. Stromabwärts der Klappe 22 und stromaufwärts des Ladeluftkühlers 26 ist ein erster Drucksensor 24 vorgesehen, welcher zur Steuerung oder Regelung des Frischluftmassenstroms und/oder der Hochdruck-Abgasrückführung 30, 80 verwendet werden kann. Dazu ist stromabwärts des Ladeluftkühlers 26 eine Einlassstelle 28 vorgesehen, an welcher das über die Hochdruck-Abgasrückführung 30, 80 zurückgeführte Abgas der Frischluft aus dem Luftversorgungssystem 50 beigemischt wird.

Der Luftmassenmesser 58 und der Luftfilter 12 können auch in einem gemeinsamen Gehäuse angeordnet sein, sodass der Luftfilter 12 und der Luftmassenmesser 58 eine Baugruppe ausbildet. Stromabwärts des Luftfilters 12 und stromaufwärts des Verdichters 14 des Abgasturboladers 16 ist eine Einmündung 78 vorgesehen, an welcher eine Abgasrückführungsleitung 72 einer Niederdruck-Abgasrückführung 70 in den Ansaugkanal 52 mündet.

Die Abgasanlage 60 umfasst einen Abgaskanal 96, in welchem in Strömungsrichtung eines Abgases der Brennkraftmaschine 10 durch den ersten Abgaskanal 96 eine Turbine 40 des Abgasturboladers 16 angeordnet ist, welche den Verdichter 14 im Luftversorgungssystem 50 über eine Welle antreibt. Der Abgasturbolader 16 ist vorzugsweise als Abgasturbolader 16 mit variabler Turbinengeometrie ausgeführt. Dazu sind einem Turbinenrad der Turbine 40 verstellbare Leitschaufeln vorgeschaltet, über welche die Anströmung des Abgases auf die Schaufeln der Turbine 40 variiert werden kann. Stromabwärts der Turbine 40 sind mehrere Abgasnachbehandlungskomponenten 42, 46, 48, 62 vorgesehen.

Dabei ist unmittelbar stromabwärts der Turbine 40 als erste Komponente der Abgasnachbehandlung ein Oxidationskatalysator 42 oder ein NOx-Speicherkatalysator 64 angeordnet. Stromabwärts des Oxidationskatalysators 42 oder des NOx-Speicherkatalysators 64 ist ein Partikelfilter 46 mit einer Beschichtung zur selektiven katalytischen Reduktion von Stickoxiden (SCR-Beschichtung) angeordnet. Der Oxidationskatalysator 42 oder der NOx-Speicherkatalyator 64 umfasst einen elektrisch beheizbaren Katalysator 62, mit welchem ein Abgasstrom der Brennkraftmaschine aufgeheizt werden kann. Alternativ kann dem Oxidationskatalysator 42 oder dem NOx-Speicherkatalysator 64 ein elektrisch beheizbarer Katalysator 62 vorgeschaltet sein, um den Abgasstrom der Brennkraftmaschine 10 vor Eintritt in den Oxidationskatalysator 42 oder den NOx-Speicherkatalysator 62 zu konditionieren. Stromabwärts des Partikelfilters 46 ist vorzugsweise in Unterbodenlage eines Kraftfahrzeuges ein zweiter SCR-Katalysator 48 im Abgaskanal 96 angeordnet. Der zweite SCR-Katalysator 96 kann einen Oxidationskatalysator, insbesondere einen Ammoniak-Sperrkatalysator aufweisen.

Alternativ kann dem zweiten SCR-Katalysator 52 ein Ammoniak-Sperrkatalysator nachgeschaltet sein.

Stromabwärts des Oxidationskatalysators 42 oder des NOx-Speicherkatalysators 64 und stromaufwärts des ersten SCR-Katalysators 48 ist eine Dosiereinheit 44 zur Eindosierung eines Reduktionsmittels, insbesondere von wässriger Harnstofflösung, in den Abgaskanal 96 vorgesehen. Stromabwärts des Partikelfilters 48 mit der SCR-Beschichtung zweigt eine Abgasrückführungsleitung 72 einer Niederdruck-Abgasrückführung 70 an einer Verzweigung 68 aus dem Abgaskanal 96 ab. Stromabwärts der Verzweigung 72 und stromaufwärts des zweiten SCR-Katalysators 52 ist eine Abgasklappe 66 angeordnet, mit welcher die Abgasrückführung über die Niederdruck-Abgasrückführung 70 gesteuert werden kann.

Die Niederdruck-Abgasrückführung 70 umfasst neben der Abgasrückführungsleitung 72 einen Abgasrückführungskühler 74 und ein Abgasrückführungsventil 76, über welches die Abgasrückführung durch die Abgasrückführungsleitung 72 steuerbar ist. In dem Abgaskanal 96 kann eine Abgastemperatur durch einen Temperatursensor erfasst werden oder durch ein Steuergerät 90 berechnet werden, um die Niederdruck-Abgasrückführungen 70 zu aktivieren, sobald die Abgastemperatur T_{EG} einen definierten Schwellenwert überschritten hat. An der Abgasrückführungsleitung 72 der Niederdruck-Abgasrückführung 70 kann ein weiterer Temperatursensor vorgesehen werden, um die Temperatur des zurückgeführten Abgases stromabwärts des Abgasrückführungskühlers 74 zu ermitteln. Dadurch kann vermieden werden, dass das zurückgeführte Abgas so stark gekühlt wird, dass der Taupunkt unterschritten wird und es zu einem Auskondensieren von Wassertropfen in der Abgasrückführungsleitung 72 kommt. Somit kann verhindert werden, dass Wasserdampf oder im Abgas enthaltene Gaskomponenten auskondensieren und in der Abgasrückführung 70 oder im Luftversorgungssystem 50 zu Beschädigungen oder Ablagerungen führen.

Stromabwärts der Verzweigung 68 und stromaufwärts des Abgasrückführungskühlers 74 kann ein Filter vorgesehen werden, um den Eintrag von Partikeln in die Niederdruck-Abgasrückführung 70 zu minimieren. Die Abgasrückführungsleitung 72 mündet an einer Einmündung 78 in den Ansaugkanal 52 des Luftversorgungssystems 50.

In der Abgasanlage 40 ist stromabwärts des Abgaskrümmers 36 und stromaufwärts der Turbine 40 des Abgasturboladers 16 ein zweiter Drucksensor 38 vorgesehen. Dieser kann zur Bestimmung des Abgasgegendrucks und/oder zur Bemessung/Errechnung der Abgasrückführrate genutzt werden.

Dem Partikelfilter 46 ist ein Differenzdrucksensor 98 zugeordnet, mit welchem eine Druckdifferenz Δp über den Partikelfilter 46 ermittelt werden kann. Auf diese Weise kann der Beladungszustand des Partikelfilters 46 ermittelt und bei Überschreiten eines definierten Beladungsniveaus eine Regeneration des Partikelfilters 46 eingeleitet werden. Ferner ist in der Abgasanlage 60 ein Temperatursensor vorgesehen, um die Abgastemperatur T_{EG} zu ermitteln.

Stromabwärts der Dosiereinheit 44 und stromaufwärts des Partikelfilters 46 kann ein Abgasmischer 68 vorgesehen sein, um eine Durchmischung von Abgasstrom der Brennkraftmaschine 10 und des Reduktionsmittels vor Eintritt in den Partikelfilter 46 zu verbessern und die Länge der Mischstrecke zu verkürzen.

Die Brennkraftmaschine 10 ist mit einem Steuergerät 90 verbunden, welches über nicht dargestellte Signalleitungen mit den Druck-Sensoren 24, 38, 98, den Temperatursensoren, den Kraftstoffinjektoren 94 der Brennkraftmaschine 10, der Dosiereinheit 44 und dem elektrisch antreibbaren Verdichter 20 sowie dem elektrischen Heizelement 88 des elektrisch beheizbaren Katalysators 62 verbunden ist.

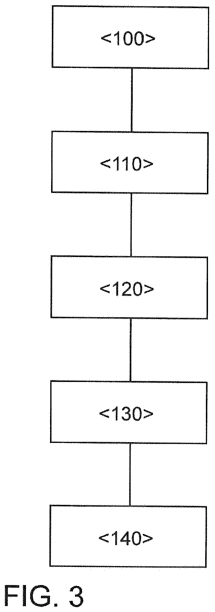

In Figur 3 ist ein Ablaufdiagramm zur Durchführung eines erfindungsgemäßen Verfahrens zum Betreiben einer Brennkraftmaschine 10 dargestellt. Dabei soll durch eine Kombination des Zuschaltens eines wahlweise antreibbaren Verdichters 20 und eines elektrischen Beheizens eines elektrischen Heizelements 88 durch ein 48-Volt-Bordnetz eines Kraftfahrzeuges der Zielkonflikt zwischen minimalen Rußpartikelemissionen und minimalen Stickoxidemissionen gelöst werden. Gleichzeitig soll der Anstieg der Kohlenstoffdioxidemission gemindert werden. Mithilfe des wahlweise antreibbaren elektrischen Verdichters 20 im Luftversorgungssystem 50 kann insbesondere im dynamischen Betrieb der Brennkraftmaschine 10 und dort gerade bei positiven Lastsprüngen die Füllung der Brennkammern 34 so weit angehoben werden, dass die Partikelemissionen in diesen Betriebszuständen deutlich abgesenkt werden können. Die Vorteile eines Zuschaltens des wahlweise antreibbaren elektrischen Verdichters 20 nehmen mit steigender spezifischer Leistung der Brennkraftmaschine 10 zu, da mit größerem Düsendurchfluss der Kraftstoffinjektoren 94, welcher zum Erreichen höherer Leistungen notwendig ist, auch das Niveau der Partikelrohemissionen ansteigt.

In einem ersten Verfahrensschritt <100> wird die Brennkraftmaschine 10 gestartet, wobei das elektrische Heizelement 88 des elektrisch beheizbaren Katalysators 62 ab dem Start der Brennkraftmaschine 10 in einem Verfahrensschritt <110> beheizt wird, um den Partikelfilter 46 möglichst zeitnah auf eine Temperatur aufzuheizen, ab welcher eine selektive, katalytische Reduktion von Stickoxiden möglich ist. In einem Verfahrensschritt <120> wird durch das Steuergerät 90 ein dynamischer Betrieb und/oder die Anforderung eines Lastsprungs der Brennkraftmaschine 10 erkannt, wobei in einem Verfahrensschritt <130> der wahlweise antreibbare elektrische Verdichter 20 zugeschaltet wird. Durch den wahlweise antreibbaren elektrischen Verdichter 20 wird die Füllung der Brennkammern 34 der Brennkraftmaschine 10 in einem Verfahrensschritt <140> verbessert, wodurch die Partikelrohemissionen gemindert werden können. Das Zuschalten des wahlweise antreibbaren elektrischen Verdichters 20 führt zu einem Druckanstieg auf der Einlassseite der Brennkraftmaschine 10, was zu einer Reduzierung der Abgasrückführungsrate über die Hochdruck-Abgasrückführung 80 in einem Verfahrensschritt <140> und einem damit verbundenen Anstieg der NOx-Rohemissionen führt. Um diese NOx-Rohemissionen möglichst effektiv aus dem Abgasstrom der Brennkraftmaschine 10 zu entfernen, ist es notwendig, dass der NOx-Speicherkatalysator 64 und/oder der Partikelfilter 46 mit der SCR-Beschichtung möglichst schnell nach dem Kaltstart seine Betriebstemperatur erreichen. Dies wird durch das elektrische Beheizen des elektrischen Heizelements 88 erreicht. Um die notwendige elektrische Leistung für einen parallelen Betrieb des elektrisch angetriebenen Verdichters 20 und des elektrischen Heizelements 88 im elektrisch beheizbaren Katalysator 62 sicherzustellen, ist es vorteilhaft, wenn das Bordnetz 86 des Kraftfahrzeuges ein 48-Volt-Bordnetz ist.

Die Kombination eines wahlweise betreibbaren elektrischen Verdichters 20 und eines elektrisch beheizbaren Katalysators 62 erweist sich somit als besonders vorteilhaft zum gleichzeitigen Erreichen von niedrigen Stickoxidemissionen und geringen Partikelemissionen. Die geringeren Partikelemissionen haben den zusätzlichen Vorteil, dass der Partikelfilter 46 seltener regeneriert werden muss, was zusätzlich zu einer Reduzierung des Mehrverbrauchs und der damit verbundenen Kohlenstoffdioxidemissionen führt.

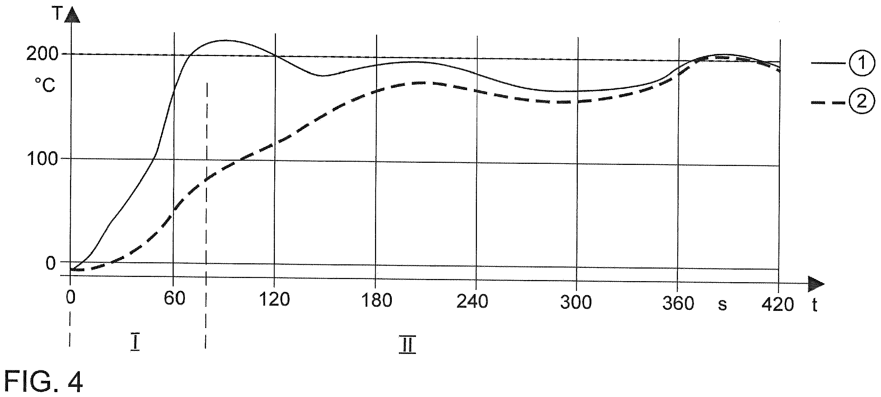

In Figur 4 ist ein Temperaturverlauf der Temperatur im Partikelfilter 46, insbesondere an der katalytisch wirksamen Beschichtung des Partikelfilters 46 dargestellt. Dabei ist zu erkennen, dass der Partikelfilter 46 bei einem Verfahren (1) mit elektrisch beheiztem Katalysator 62 bereits nach einer etwa 70 Sekunden andauernden Heizphase I durch das elektrische Heizelement 88 auf seine Light-Off-Temperatur bezüglich der Stickoxid-Konvertierung aufgeheizt wird, wenn das elektrische Heizelement 88 erfindungsgemäß aus einem 48-Volt-Bordnetz eines Kraftfahrzeuges mit Strom versorgt wird. Dadurch sind im Vergleich zu 12-Volt-Bordnetzen deutlich größere Heizleistungen, insbesondere im Bereich von 2,5 kW-6 kW möglich, um den Partikelfilter 46 auf seine Light-Off-Temperatur von etwa 200°C aufzuheizen. Dabei können die Stickoxide in einer Betriebsphase II in unschädlichen molekularen Stickstoff, Kohlenstoffdioxid und Wasserdampf konvertiert werden.

Ferner ist zu erkennen, dass der Partikelfilter 46 ohne ein vorgeschaltetes elektrisches Heizelement 88 in einem Verfahren (2) ohne elektrisches Beheizen des Abgasstroms bei gleicher Betriebslast erst nach etwa 360 Sekunden seine Light-Off-Temperatur erreicht, ab welcher Stickoxide effizient in molekularen Stickstoff, Kohlenstoffdioxid und Wasserdampf konvertiert werden können. Somit erreicht der Partikelfilter 46 fast fünf Minuten früher seine Light-Off-Temperatur, wodurch insbesondere in einer Kaltstartphase die Stickoxidemissionen deutlich reduziert werden können.

### Bezugszeichenliste

- 10: Brennkraftmaschine
- 12: Luftfilter
- 14: Verdichter
- 16: Abgasturbolader
- 18: Bypass

- 20: elektrisch angetriebener Verdichter
- 22: Klappe
- 24: erster Drucksensor
- 26: Ladeluftkühler
- 28: Einlassstelle

- 30: Abgasrückführung
- 32: Einlasskrümmer
- 34: Brennkammer
- 36: Abgaskrümmer
- 38: zweiter Drucksensor

- 40: Turbine
- 42: Dieseloxidationskatalysator
- 44: Dosiereinheit
- 46: Partikelfilter
- 48: SCR-Katalysator

- 50: Luftversorgungssystem
- 52: Ansaugkanal
- 54: Verzweigung
- 56: Einmündung
- 58: Luftmassenmesser
- 60: Abgasanlage
- 62: elektrisch beheizbarer Katalysator
- 64: NOx-Speicherkatalysator
- 66: Abgasklappe
- 68: Verzweigung

- 70: Niederdruck-Abgasrückführung
- 72: Abgasrückführungsleitung
- 74: Abgasrückführungskühler
- 76: Abgasrückführungsventil
- 78: Einmündung

- 80: Hochdruck-Abgasrückführung
- 82: Abgasrückführungsleitung
- 84: Abgasrückführungsventil
- 86: Bordnetz
- 88: elektrisches Heizelement

- 90: Steuergerät
- 92: elektrisches Antriebsmotor
- 94: Kraftstoffinjektor
- 96: Abgaskanal
- 98: Differenzdrucksensor

- T: Temperatur
- t: Zeit
- I: elektrische Heizphase
- II: Betriebsphase

## Patentansprüche

1. Brennkraftmaschine (10) mit einem wahlweise antreibbaren Verdichter (20) auf einer Frischluftseite der Brennkraftmaschine (10) und einem Katalysator (42, 46, 48, 62) auf einer Abgasseite der Brennkraftmaschine (10), wobei die Brennkraftmaschine (10) und der wahlweise antreibbare Verdichter (20) mit einem Bordnetz (86) verbunden sind, wobei der Katalysator (42, 46, 48, 62) ein mit dem Bordnetz (86) verbundenes Heizelement (88) umfasst und mit dem Heizelement (88) das Substrat des Katalysators (42, 46, 48, 62) und/oder die Abgasseite stromaufwärts des Substrates des Katalysators (42, 46, 48, 62) beheizbar ist, **dadurch gekennzeichnet, dass** der wahlweise antreibbare Verdichter (20) eine Peakleistung von 2,5 - 6 kW aufweist und das Heizelement (88) eine Heizleistung aufweist, welche zwischen 50 % und 100 % der Peakleistung des wahlweise antreibbaren Verdichters (20) liegt.

2. Brennkraftmaschine (10) nach Anspruch 1, **dadurch gekennzeichnet, dass** die Brennkraftmaschine (10) mindestens eine Brennkammer (34) umfasst, wobei die Brennkammer (34) einlassseitig mit einem Luftversorgungssystem (50) und auslassseitig mit einer Abgasanlage (60) verbunden ist.

3. Brennkraftmaschine (10) nach Anspruch 2, **dadurch gekennzeichnet, dass** in der Abgasanlage (60) eine Turbine (40) eines Abgasturboladers (16) angeordnet ist, wobei die Turbine (40) einen Verdichter (14) in dem Luftversorgungssystem (50) antreibt, wobei der wahlweise antreibbare Verdichter (20) in einem Ansaugkanal (52) stromabwärts des Verdichters (14) des Abgasturboladers (16) angeordnet ist.

4. Brennkraftmaschine (10) nach einem der Ansprüche 2 oder 3, **dadurch gekennzeichnet, dass** der wahlweise antreibbare Verdichter (20) in einem Bypass (18) zum Ansaugkanal (52) des Luftversorgungssystems (50) angeordnet ist.

5. Brennkraftmaschine (10) nach Anspruch 2, **dadurch gekennzeichnet, dass** der wahlweise antreibbare Verdichter (20) der Verdichter (14) des Abgasturboladers (16) ist, wobei der Verdichter (14, 20) zusätzlich oder alternativ zum Antrieb durch die Turbine (40) des Abgasturboladers (16) in der Abgasanlage (60) durch einen elektrischen Antriebsmotor (92) antreibbar ist.

6. Brennkraftmaschine (10) nach einem der Ansprüche 1 bis 5, **dadurch gekennzeichnet, dass** die Spannung des Bordnetzes 40 - 56 Volt beträgt.

7. Brennkraftmaschine (10) nach einem der Ansprüche 1 bis 6, **dadurch gekennzeichnet, dass** die Brennkraftmaschine als selbstzündender Verbrennungsmotor nach dem Dieselprinzip ausgeführt ist.

8. Brennkraftmaschine (10) nach einem der Ansprüche 1 bis 7, **dadurch gekennzeichnet, dass** in einer Abgasanlage (60) der Brennkraftmaschine (10) stromabwärts einer Turbine (40) eines Abgasturboladers (16) ein Oxidationskatalysator (42) oder ein NOx-Speicherkatalysator (64), stromabwärts des Oxidationskatalysators (42) oder des NOx-Speicherkatalysators (64) ein Partikelfilter (46) mit einer Beschichtung zur selektiven, katalytischen Reduktion von Stickoxiden, und stromabwärts des Partikelfilters (46) ein weiterer SCR-Katalysator (48) angeordnet sind.

9. Brennkraftmaschine (10) nach Anspruch 8, **dadurch gekennzeichnet, dass** das Heizelement (88) in den Oxidationskatalysator (42) oder den NOx-Speicherkatalysator (64) integriert oder einem dieser Katalysatoren (42, 64) unmittelbar vorgeschaltet ist.

10. Brennkraftmaschine (10) nach Anspruch 8, **dadurch gekennzeichnet, dass** das Heizelement (88) stromabwärts des Oxidationskatalysators (42) oder des NOx-Speicherkatalysators (64) und stromaufwärts des Partikelfilters (46) angeordnet ist oder in den Partikelfilter (46) integriert ist.

11. Brennkraftmaschine (10) nach einem der Ansprüche 8 bis 10, **dadurch gekennzeichnet, dass** stromabwärts des Partikelfilters (46) eine Niederdruck-Abgasrückführung (70) aus einem Abgaskanal der Abgasanlage (60) abzweigt, welche stromaufwärts des Verdichters (14) des Abgasturboladers (16) in einen Ansaugkanal (52) des Luftversorgungssystems (50) einmündet.

12. Verfahren zum Betreiben einer Brennkraftmaschine (10) mit einem wahlweise angetriebenen Verdichter (20) auf einer Frischluftseite der Brennkraftmaschine (10) und einem Katalysator (42, 46, 48, 62) auf einer Abgasseite der Brennkraftmaschine (10), wobei der wahlweise antreibbare Verdichter (20) angetrieben wird, **dadurch gekennzeichnet, dass** der Katalysator ein Heizelement (88) umfasst, mit dem das Substrat des Katalysators (42, 46, 48, 62) und/oder die Abgasseite stromaufwärts des Substrates beheizt wird, wobei der wahlweise antreibbare Verdichter (20) eine Peakleistung von 2,5 - 6 kW aufweist und das Heizelement (88) eine Heizleistung aufweist, welche zwischen 50 % und 100 % der Peakleistung des wahlweise antreibbaren Verdichters (20) liegt

13. Verfahren zum Betreiben einer Brennkraftmaschine (10) nach Anspruch 12, **dadurch gekennzeichnet, dass** der wahlweise angetriebene Verdichter (20) in einem dynamischen Betrieb der Brennkraftmaschine (10) zugeschaltet wird, um die Partikelrohemissionen in der mindestens einen Brennkammer (34) der Brennkraftmaschine (10) zu senken.

## Claims

1. Internal combustion engine (10) having, on a fresh air side of the internal combustion engine (10), a compressor (20) which can be optionally driven and, on an exhaust side of the internal combustion engine (10), a catalytic converter (42, 46, 48, 62), wherein the internal combustion engine (10) and the compressor (20) which can be optionally driven are connected to an on-board power system (86), wherein the catalytic converter (42, 46, 48, 62) comprises a heating element (88) which is connected to the on-board power system (86), and the substrate of the catalytic converter (42, 46, 48, 62) and/or the exhaust side upstream of the substrate of the catalytic converter (42, 46, 48, 62) can be heated with the heating element (88), **characterized in that** the compressor (20) which can be optionally driven has a peak power of 2.5 - 6 kW, and the heating element (88) has a heating power which is between 50% and 100% of the peak power of the compressor (20) which can be driven optionally.

2. Internal combustion engine (10) according to Claim 1, **characterized in that** the internal combustion engine (10) comprises at least one combustion chamber (34), wherein the combustion chamber (34) is connected on the inlet side to an air supply system (50) and on the outlet side to an exhaust system (60).

3. Internal combustion engine (10) according to Claim 2, **characterized in that** a turbine (40) of an exhaust gas turbocharger (16) is arranged in the exhaust system (60), wherein the turbine (40) drives a compressor (14) in the air supply system (50), wherein the compressor (20) which can be driven optionally is arranged in an intake duct (52) downstream of the compressor (14) of the exhaust gas turbocharger (16).

4. Internal combustion engine (10) according to one of Claims 2 and 3, **characterized in that** the compressor (20) which can be driven optionally is arranged in a bypass (18) of the intake duct (52) of the air supply system (50).

5. Internal combustion engine (10) according to Claim 2, **characterized in that** the compressor (20) which can be driven optionally is the compressor (14) of the exhaust gas turbocharger (16), wherein, in addition to or as an alternative to the drive by means of the turbine (40) of the exhaust gas turbocharger (16) in the exhaust system (60), the compressor (14, 20) can be driven by an electric drive motor (92).

6. Internal combustion engine (10) according to one of Claims 1 to 5, **characterized in that** the voltage of the on-board power system is 40 - 56 volts.

7. Internal combustion engine (10) according to one of Claims 1 to 6, **characterized in that** the internal combustion engine is embodied as an auto-ignition internal combustion engine according to the diesel principle.

8. Internal combustion engine (10) according to one of Claims 1 to 7, **characterized in that**, in an exhaust system (60) of the internal combustion engine (10), an oxidizing catalytic converter (42) or an NOx storage-type catalytic converter (64) is arranged downstream of a turbine (40) of an exhaust gas turbocharger (16), a particle filter (46) with a coating for the selective catalytic reduction of nitrogen oxides is arranged downstream of the oxidizing catalytic converter (42) or of the NOx storage-type catalytic converter (64), and a further SCR catalytic converter (48) is arranged downstream of the particle filter (46).

9. Internal combustion engine (10) according to Claim 8, **characterized in that** the heating element (88) is integrated into the oxidizing catalytic converter (42) or the NOx storage-type catalytic converter (64) or connected directly upstream of one of these catalytic converters (42, 64).

10. Internal combustion engine (10) according to Claim 8, **characterized in that** the heating element (88) is arranged downstream of the oxidizing catalytic converter (42) or of the NOx storage-type catalytic converter (64) and upstream of the particle filter (46), or is integrated into the particle filter (46).

11. Internal combustion engine (10) according to one of Claims 8 to 10, **characterized in that** a low-pressure exhaust gas recirculation system (70) branches off from an exhaust duct of the exhaust system (60) downstream of the particle filter (46) and opens into an intake duct (52) of the air supply system (50) upstream of the compressor (14) of the exhaust gas turbocharger (16).

12. Method for operating an internal combustion engine (10) with a compressor (20) which is driven optionally on a fresh air side of the internal combustion engine (10) and a catalytic converter (42, 46, 48, 62) on an exhaust gas side of the internal combustion engine (10), wherein the compressor (20) which can be driven optionally is driven, **characterized in that** the catalytic converter comprises a heating element (88) with which the substrate of the catalytic converter (42, 46, 48, 62) and/or the exhaust gas side upstream of the substrate is heated, wherein the compressor (20) which can be optionally driven has a peak power of 2.5 - 6 kW, and the heating element (88) has a heating power which is between 50% and 100% of the peak power of the compressor (20) which can be driven optionally.

13. Method for operating an internal combustion engine (10) according to Claim 12, **characterized in that** the compressor (20) which can be driven optionally is activated in a dynamic operating mode of the internal combustion engine (10), in order to reduce the raw particle emissions in the at least one combustion chamber (34) of the internal combustion engine (10).

## Revendications

1. Moteur à combustion interne (10) comportant un compresseur (20) pouvant être entraîné sélectivement sur un côté d'air frais du moteur à combustion interne (10) et un catalyseur (42, 46, 48, 62) sur un côté de gaz d'échappement du moteur à combustion interne (10), le moteur à combustion interne (10) et le compresseur (20) pouvant être entraîné sélectivement étant reliés à un réseau de bord (86), le catalyseur (42, 46, 48, 62) comportant un élément chauffant (88) relié au réseau de bord (86) et, à l'aide de l'élément chauffant (88), le substrat du catalyseur (42, 46, 48, 62) et/ou le côté des gaz d'échappement en amont du substrat du catalyseur (42, 46, 48, 62) pouvant être chauffés, **caractérisé en ce que** le compresseur (20) pouvant être entraîné sélectivement présente une puissance maximale de 2,5 à 6 kW et l'élément chauffant (88) présente une puissance de chauffage, laquelle est comprise entre 50 % et 100 % de la puissance maximale du compresseur (20) pouvant être entraîné sélectivement.

2. Moteur à combustion interne (10) selon la revendication 1, **caractérisé en ce que** le moteur à combustion interne (10) comporte au moins une chambre de combustion (34), la chambre de combustion (34) étant reliée, côté admission, à un système d'alimentation en air (50) et, côté sortie, à un système d'échappement (60).

3. Moteur à combustion interne (10) selon la revendication 2, **caractérisé en ce qu'**une turbine (40) d'un turbocompresseur à gaz d'échappement (16) est disposée dans le système d'échappement (60), la turbine (40) entraînant un compresseur (14) dans le système d'alimentation en air (50), le compresseur (20) pouvant être entraîné sélectivement étant disposé dans un canal d'aspiration (52) en aval du compresseur (14) du turbocompresseur à gaz d'échappement (16).

4. Moteur à combustion interne (10) selon l'une des revendications 2 et 3, **caractérisé en ce que** le compresseur (20) pouvant être entraîné sélectivement est disposé dans une dérivation (18) par rapport au canal d'aspiration (52) du système d'alimentation en air (50).

5. Moteur à combustion interne (10) selon la revendication 2, **caractérisé en ce que** le compresseur (20) pouvant être entraîné sélectivement est le compresseur (14) du turbocompresseur à gaz d'échappement (16), le compresseur (14, 20) pouvant être entraîné au moyen d'un moteur d'entraînement électrique (92) en plus de l'entraînement par la turbine (40) du turbocompresseur à gaz d'échappement (16) dans le système d'échappement (60) ou en variante de cet entraînement.

6. Moteur à combustion interne (10) selon l'une des revendications 1 à 5, **caractérisé en ce que** la tension du réseau de bord vaut 40 à 56 volts.

7. Moteur à combustion interne (10) selon l'une des revendications 1 à 6, **caractérisé en ce que** le moteur à combustion interne est réalisé comme moteur à combustion interne à autoallumage selon le principe Diesel.

8. Moteur à combustion interne (10) selon l'une des revendications 1 à 7, **caractérisé en ce que** dans un système d'échappement (60) du moteur à combustion interne (10), un catalyseur d'oxydation (42) ou un catalyseur à accumulateur de NOx (64) est disposé en aval d'une turbine (40) d'un turbocompresseur à gaz d'échappement (16), un filtre à particules (46) doté d'un revêtement pour la réduction catalytique sélective d'oxydes d'azote est disposé en aval du catalyseur d'oxydation (42) ou du catalyseur à accumulateur de NOx (64), et un autre catalyseur SCR (48) est disposé en aval du filtre à particules (46).

9. Moteur à combustion interne (10) selon la revendication 8, **caractérisé en ce que** l'élément chauffant (88) est intégré dans le catalyseur d'oxydation (42) ou le catalyseur à accumulateur de NOx (64) ou est monté directement en amont de l'un de ces catalyseurs (42, 64).

10. Moteur à combustion interne (10) selon la revendication 8, **caractérisé en ce que** l'élément chauffant (88) est disposé en aval du catalyseur d'oxydation (42) ou du catalyseur à accumulateur de NOx (64) et en amont du filtre à particules (46) ou est intégré dans le filtre à particules (46).

11. Moteur à combustion interne (10) selon l'une des revendications 8 à 10, **caractérisé en ce qu'**un système de recirculation des gaz d'échappement à basse pression (70) bifurque à partir d'un canal de gaz d'échappement du système d'échappement (60) en aval du filtre à particules (46), lequel système de recirculation débouche dans un canal d'aspiration (52) du système d'alimentation en air (50) en amont du compresseur (14) du turbocompresseur à gaz d'échappement (16).

12. Procédé de fonctionnement d'un moteur à combustion interne (10) comportant un compresseur (20) entraîné sélectivement sur un côté d'air frais du moteur à combustion interne (10) et un catalyseur (42, 46, 48, 62) sur un côté de gaz d'échappement du moteur à combustion interne (10), le compresseur (20) pouvant être entraîné sélectivement étant entraîné, **caractérisé en ce que** le catalyseur comporte un élément chauffant (88) à l'aide duquel le substrat du catalyseur (42, 46, 48, 62) et/ou le côté des gaz d'échappement en amont du substrat sont chauffés, le compresseur (20) pouvant être entraîné sélectivement présentant une puissance maximale de 2,5 à 6 kW et l'élément chauffant (88) présentant une puissance de chauffage, laquelle est comprise entre 50 % et 100 % de la puissance maximale du compresseur (20) pouvant être entraîné sélectivement.

13. Procédé de fonctionnement d'un moteur à combustion interne (10) selon la revendication 12, **caractérisé en ce que** le compresseur (20) entraîné sélectivement est mis en marche dans un fonctionnement dynamique du moteur à combustion interne (10), afin de réduire les émissions brutes de particules dans l'au moins une chambre de combustion (34) du moteur à combustion interne (10).
